# EUROPEAN PATENT APPLICATION

(11) **EP 3 926 547 A1**
(43) Date of publication of application: **22.12.2021**
(21) Application number: 21162287.3
(22) Date of filing: 12.03.2021
(51) Int. Cl.: G06N 3/08

(54) **PROGRAM, LEARNING METHOD, AND INFORMATION PROCESSING APPARATUS**

(30) Priority: 18.06.2020 JP 2020105655
(71) Applicant: Fujitsu Limited, Kawasaki-shi, Kanagawa 211-8588 (JP)
(72) Inventor: Hara, Yasushi, Kawasaki-shi, Kanagawa 211-8588 (JP); Kasagi, Akihiko, Kawasaki-shi, Kanagawa 211-8588 (JP); Danjo, Takumi, Kawasaki-shi, Kanagawa 211-8588 (JP); Kai, Yutaka, Kawasaki-shi, Kanagawa 211-8588 (JP)
(74) Representative: Hoffmann Eitle

(57) **Abstract**

A memory holds a model including a plurality of layers including their respective parameters and training data. A processor starts learning processing, which repeatedly calculates an error of an output of the model by using the training data, calculates an error gradient, which indicates a gradient of the error with respect to the parameters, for each of the layers, and updates the parameters based on the error gradients. The processor calculates a difference between a first error gradient calculated in a first iteration in the learning processing and a second error gradient calculated in a second iteration after the first iteration for a first layer among the plurality of layers. In a case where the difference is less than a threshold, the processor skips the calculating of the error gradient and the updating of the parameter for the first layer in a third iteration after the second iteration.

## Description

### FIELD

The embodiments discussed herein relate to a program, a learning method, and an information processing apparatus.

### BACKGROUND

There are cases where machine learning is performed as data analysis using an information processing apparatus. In this machine learning, training data indicating known cases are gathered. The information processing apparatus analyzes the training data and generates a model, which generalizes a relationship between a factor (which may also be referred to as an explanatory variable or an independent variable) and a result (which may also be referred to as an objective variable or a dependent variable). The information processing apparatus uses this generated model to predict the results of unknown cases. For example, the information processing apparatus generates an image recognition model for determining the kinds of objects captured in images.

The information processing apparatus may generate a model including a plurality of layers. For example, the machine learning may be deep learning that generates a multilayer neural network. In this case, by repeating an iteration, the information processing apparatus searches for the optimum values of parameters included in the individual layers. In each iteration, by using training data, the information processing apparatus evaluates an error of an output of the model, calculates an error gradient, which is a gradient of the error with respect to the parameters, and updates the parameters based on the individual error gradient. For example, backpropagation is used to optimize the parameters.

There has been proposed a feature filtering method for automatically excluding some of the plurality of explanatory variables included in training data from machine learning. In this proposed feature filtering method, a filtering threshold for an explanatory variable is determined based on the corresponding gradient calculated in the previous iteration. There has also been proposed a learning apparatus for automatically removing some of the layers in machine learning that generates a multilayer neural network. The proposed learning apparatus calculates a contribution level with respect to the output of the multilayer neural network for each of the plurality of layers, removes layers having a small contribution, and performs machine learning again. See, for example, the following literatures.
International Publication Pamphlet No. WO2017/157183
Japanese Laid-open Patent Publication No. 2019-185275

In machine learning that generates a model including a plurality of layers, parameter convergence does not always progress evenly in all layers. There are cases where parameters in some layers converge earlier than those in the other layers as the number of iterations rises. For example, in a multilayer neural network, the parameters in layers close to the input layer could converge earlier than those in layers close to the output layer.

In conventional machine learning, the parameters in all layers are updated in each iteration. Thus, there are cases where parameters in some of the layers little change or do not change at all after a single iteration. Thus, unnecessary parameter update processing is consequently performed. That is, the conventional machine learning has a problem with an excessive calculation amount.

### SUMMARY

It is an object in one aspect of the embodiments to reduce the calculation amount of updating parameters of a model including a plurality of layers.

According to one aspect, there is provided a computer program that causes a computer to execute a process including: starting learning processing for generating a model including a plurality of layers, each of which includes a parameter, the learning processing including repeatedly calculating an error of an output of the model by using training data, calculating an error gradient, which indicates a gradient of the error with respect to the parameters, for each of the layers, and updating the parameters based on the error gradients; calculating a difference between a first error gradient calculated in a first iteration in the learning processing and a second error gradient calculated in a second iteration after the first iteration for a first layer among the plurality of layers; and skipping, in a case where the difference is less than a threshold, the calculating of the error gradient of the first layer and the updating of the parameter in a third iteration after the second iteration.

### BRIEF DESCRIPTION OF DRAWINGS

FIG. 1 illustrates an information processing apparatus according to a first embodiment;
FIG. 2 illustrates a hardware example of an information processing apparatus according to a second embodiment;
FIG. 3 illustrates a structural example of a multilayer neural network;
FIG. 4 illustrates an example of learning phases in machine learning;
FIG. 5 is a graph illustrating an example of change of a prediction accuracy and an error gradient in the machine learning;
FIG. 6 illustrates an example in which the error gradients of a plurality of layers converge at different timing;
FIG. 7 illustrates an example of how updating parameters in some layers is skipped;
FIG. 8 is a graph illustrating an example of calculation of an error gradient difference;
FIG. 9 is a block diagram illustrating a functional example of the information processing apparatus;
FIG. 10 illustrates an example of an error gradient table;
FIG. 11 is the first half of a flowchart illustrating an example of a procedure of the machine learning; and
FIG. 12 is the second half of the flowchart illustrating the example of the procedure of the machine learning.

### DESCRIPTION OF EMBODIMENTS

Hereinafter, embodiments will be described with reference to drawings.

### [First Embodiment]

A first embodiment will be described.

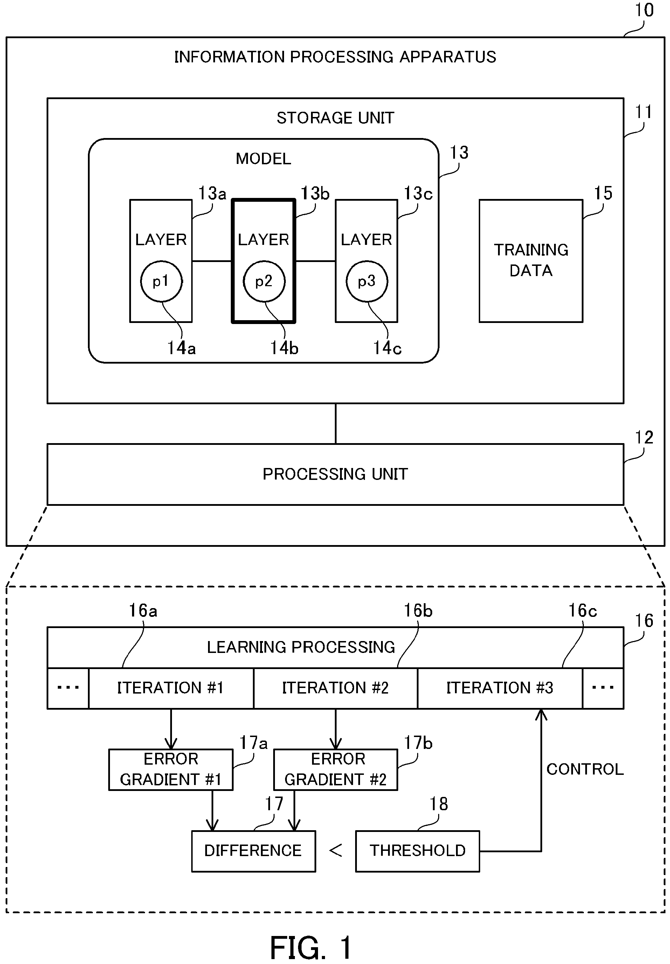

FIG. 1 illustrates an information processing apparatus according to a first embodiment.

This information processing apparatus 10 performs machine learning to generate a model including a plurality of layers from training data. The information processing apparatus 10 may be a client apparatus or a server apparatus. The information processing apparatus 10 may be referred to as a computer or a machine learning apparatus, for example.

The information processing apparatus 10 includes a storage unit 11 and a processing unit 12. The storage unit 11 may be a volatile semiconductor memory such as a random access memory (RAM) or a non-volatile storage such as a hard disk drive (HDD) or a flash memory. For example, the processing unit 12 is a processor such as a central processing unit (CPU), a graphics processing unit (GPU), or a digital signal processor (DSP). The processing unit 12 may include an electronic circuit for specific use, such as an application specific integrated circuit (ASIC) or a field programmable gate array (FPGA). The processor executes a program stored in a memory such as a RAM (e.g., the storage unit 11). A group of processors may be referred to as "a multiprocessor" or simply "a processor".

The storage unit 11 holds a model 13 and training data 15.

The model 13 is a prediction model, which predicts objective variables from explanatory variables. The model 13 may be an image recognition model, which predicts object classes from images. The model 13 includes a plurality of layers, each of which includes a parameter. These layers may be connected in series. The model 13 may be a multilayer neural network or a convolutional neural network. The values of the parameters in the individual layers are determined through machine learning. These parameters may be the weights at the individual edges in the multilayer neural network.

For example, the model 13 includes layers 13a, 13b, and 13c. The layer 13b is the next layer of the layer 13a, and the layer 13c is the next layer of the layer 13b. The layer 13a includes a parameter 14a. The layer 13b includes a parameter 14b. The layer 13c includes a parameter 14c. The training data 15 is a dataset used for optimization of the parameters of the model 13. The training data 15 includes a plurality of samples, each of which includes a correct label. The training data 15 may include a plurality of images, each of which includes a label indicating an object class.

The processing unit 12 executes learning processing 16 to optimize the parameters 14a, 14b, and 14c of the model 13 by using the training data 15. In the learning processing 16, the processing unit 12 repeatedly performs an iteration, which will be described below. The processing unit 12 may perform backpropagation on the model 13. In each iteration, the processing unit 12 enters input data included in the training data 15 to the model 13, compares an output of the model 13 with a corresponding correct label included in the training data 15, and calculates an error of the output of the model 13.

Next, the processing unit 12 calculates an error gradient, which indicates a gradient of an error with respect to the parameters, for each of the layers included in the model 13. An individual error gradient represents the error change amount that occurs when an individual parameter is changed by a minute amount. The processing unit 12 updates the parameters of the plurality of layers included in the model 13, based on the error gradients. For example, the processing unit 12 changes an individual parameter by a value obtained by multiplying a corresponding error gradient by a learning rate. The learning rate is a hyperparameter that controls the behavior of the machine learning and may be given by the user.

During the learning processing 16, the processing unit 12 may skip the calculation of the error gradient and the updating of the parameter of a part of the plurality of layers included in the model 13. This skipping of the processing of a certain layer may be referred to as skipping of the layer. In the following description, the processing unit 12 determines whether to skip the processing of the layer 13b. The processing unit 12 may perform the same determination, which has been made on the layer 13b, on the other layers, too. While the processing unit 12 has already executed an iteration 16a and an iteration 16b thereafter, the processing unit 12 has not executed an iteration 16c yet. The iteration 16b may be immediately after the iteration 16a, and the iteration 16c may be immediately after the iteration 16b.

The processing unit 12 acquires an error gradient 17a calculated for the layer 13b in the iteration 16a and an error gradient 17b calculated for the layer 13b in the iteration 16b. The processing unit 12 calculates a difference 17 between the error gradient 17a and the error gradient 17b. The difference 17 may be a numeral value obtained by subtracting the absolute value of the error gradient 17b from the absolute value of the error gradient 17a. In addition, in a case where the layer 13b includes two or more parameters, the difference 17 may be the change amount of the average of the absolute values of the two or more error gradients corresponding to the two or more parameters.

The processing unit 12 compares the difference 17 with a threshold 18. The threshold 18 may be a fixed value specified before the machine learning is started. Alternatively, the threshold 18 may be calculated based on at least one of the error gradients 17a and 17b. Alternatively, the threshold 18 may be calculated based on an error gradient (initial error gradient) calculated for the layer 13b in the initial iteration in the learning processing 16. For example, the threshold 18 may be 5% of the initial error gradient.

If the difference 17 is equal to or more than the threshold 18, the processing unit 12 calculates the error gradient of the layer 13b and updates the parameter 14b in the iteration 16c. If the difference 17 is less than the threshold 18, the processing unit 12 skips the calculation of the error gradient of the layer 13b and the updating of the parameter 14b in the iteration 16c. Thus, the parameter 14b is not changed in the iteration 16c. The processing unit 12 may skip only the processing of the layer 13b, among the layers 13a, 13b, and 13c. In backpropagation, the processing unit 12 may propagate the error gradient 17b calculated in the iteration 16b from the layer 13b to the layer 13a. In this way, the processing of the layer 13a is performed in the iteration 16c.

The information processing apparatus 10 according to the first embodiment calculates the difference 17 between the error gradient 17a of the layer 13b in the iteration 16a and the error gradient 17b of the layer 13b in the iteration 16b. If the difference 17 is less than the threshold 18, the calculation of the error gradient of the layer 13b and the updating of the parameter 14b are skipped in the subsequent iteration 16c. In this way, unnecessary parameter update processing is skipped for a layer whose parameter optimization has converged earlier than the other layers and whose parameter will not improve. Thus, since less unnecessary processing is performed in the machine learning, the calculation amount is reduced. In addition, the execution time of the machine learning for generating the model 13 is consequently shortened.

### [Second Embodiment]

Next, a second embodiment will be described.

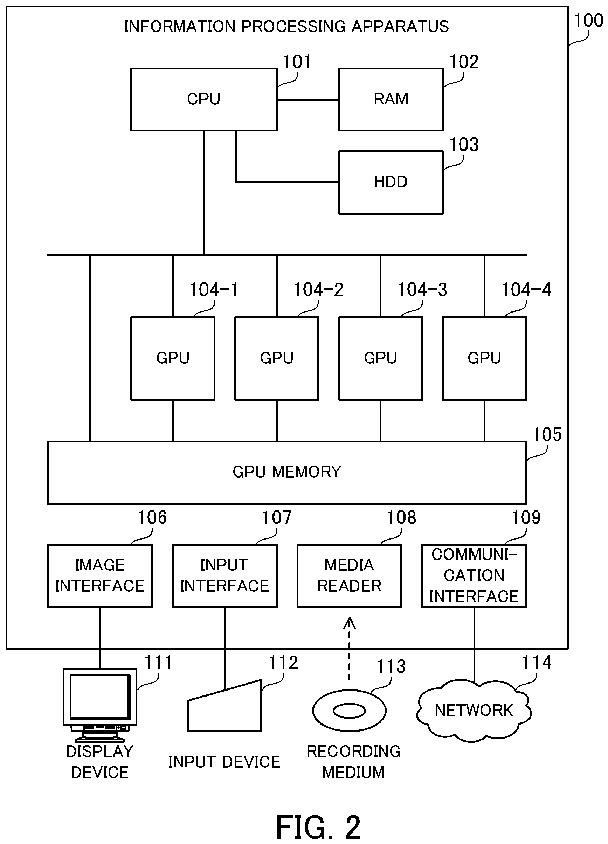

FIG. 2 illustrates a hardware example of an information processing apparatus according to a second embodiment.

This information processing apparatus 100 according to the second embodiment performs deep learning to generate a multilayer neural network. The multilayer neural network is used for image recognition, for example. The information processing apparatus 100 may be a client apparatus or a server apparatus. The information processing apparatus 100 may be referred to as a computer, a machine learning apparatus, or the like. The information processing apparatus 100 corresponds to the information processing apparatus 10 according to the first embodiment.

The information processing apparatus 100 includes a CPU 101, a RAM 102, an HDD 103, GPUs 104-1 to 104-4, a GPU memory 105, an image interface 106, an input interface 107, a media reader 108, and a communication interface 109. The CPU 101 or the GPUs 104-1 to 104-4 correspond to the above processing unit 12. The RAM 102, the HDD 103, or the GPU memory 105 corresponds to the above storage unit 11.

The CPU 101 is a processor that executes program commands and is a main processor that controls the information processing apparatus 100. The CPU 101 loads at least a part of a program or data stored in the HDD 103 to the RAM 102 and executes the program. The CPU 101 may be configured to cause the GPUs 104-1 to 104-4 to execute a program. The CPU 101 forwards a program or data from the RAM 102 to the GPU memory 105, causes the GPUs 104-1 to 104-4 to execute the forwarded program, and reads the operation result from the GPU memory 105 to the RAM 102. The CPU 101 may cause a GPU of another information processing apparatus to execute a program via the communication interface 109.

The RAM 102 is a volatile semiconductor memory that holds a program or data. The information processing apparatus 100 may include a different kind of memory other than a RAM.

The HDD 103 is a non-volatile storage that holds software programs such as an operating system (OS), middleware, and application software and data. The information processing apparatus 100 may include a different kind of storage such as a flash memory or a solid state drive (SSD). Examples of the programs executed by the CPU 101 include a platform program and a library program for controlling machine learning. Examples of the programs executed by the GPUs 104-1 to 104-4 include a library program and a user application program for machine learning.

Each of the GPUs 104-1 to 104-4 is a processor that executes program commands and is a hardware accelerator for executing a certain kind of operation at high speed. Each of the GPUs 104-1 to 104-4 executes a program on different data in a parallel manner in accordance with an instruction from the CPU 101. Each of the GPUs 104-1 to 104-4 reads a program and its corresponding data from the GPU memory 105, executes the program, and stores an operation result in the GPU memory 105.

The GPU memory 105 is a volatile semiconductor memory that holds a program or data. The GPU memory 105 is used by the GPUs 104-1 to 104-4.

The image interface 106 outputs an image to a display device 111 connected to the information processing apparatus 100 in accordance with a command from the CPU 101. Any kind of display device such as a cathode ray tube (CRT) display, a liquid crystal display (LCD), an organic electro-luminescence (OEL) display, or a projector may be used as the display device 111. Other than the display device 111, an output device such as a printer may be connected to the information processing apparatus 100.

The input interface 107 receives an input signal from an input device 112 connected to the information processing apparatus 100. Any kind of input device such as a mouse, a touch panel, a touchpad, or a keyboard may be used as the input device 112. A plurality of kinds of input devices may be connected to the information processing apparatus 100.

The media reader 108 is a reading device that reads a program or data recorded in a recording medium 113. Any kind of recording medium such as a magnetic disk such as a flexible disk (FD) or an HDD, an optical disc such as a compact disc (CD) or a digital versatile disc (DVD), or a semiconductor memory may be used as the recording medium 113. The media reader 108 copies, for example, a program or data read from the recording medium 113 to another recording medium such as the RAM 102 or the HDD 103. The read program is executed by a processor such as the CPU 101. The recording medium 113 may be a portable recording medium and may be used to distribute a program or data. In addition, the recording medium 113 or the HDD 103 may be referred to as a computer-readable recording medium.

The communication interface 109 is connected to a network 114 and communicates with another information processing apparatus via the network 114. The communication interface 109 may be a wired communication interface connected to a wired communication apparatus such as a switch and a router or may be a wireless communication interface connected to a wireless communication apparatus such as a base station or an access point.

By preparing a plurality of information processing apparatuses, each of which corresponds to the information processing apparatus 100 or the like, a multi-node system including the plurality of information processing apparatuses as nodes may be configured. In this case, the GPUs included in the different nodes may perform a program on different data in a parallel manner. For example, two nodes, each of which includes four GPUs, may be connected to the network 114, and these eight GPUs may perform a program in a parallel manner. A CPU included in any one of the nodes may control the GPUs of the plurality of nodes.

Next, a model structure and machine learning will be described.

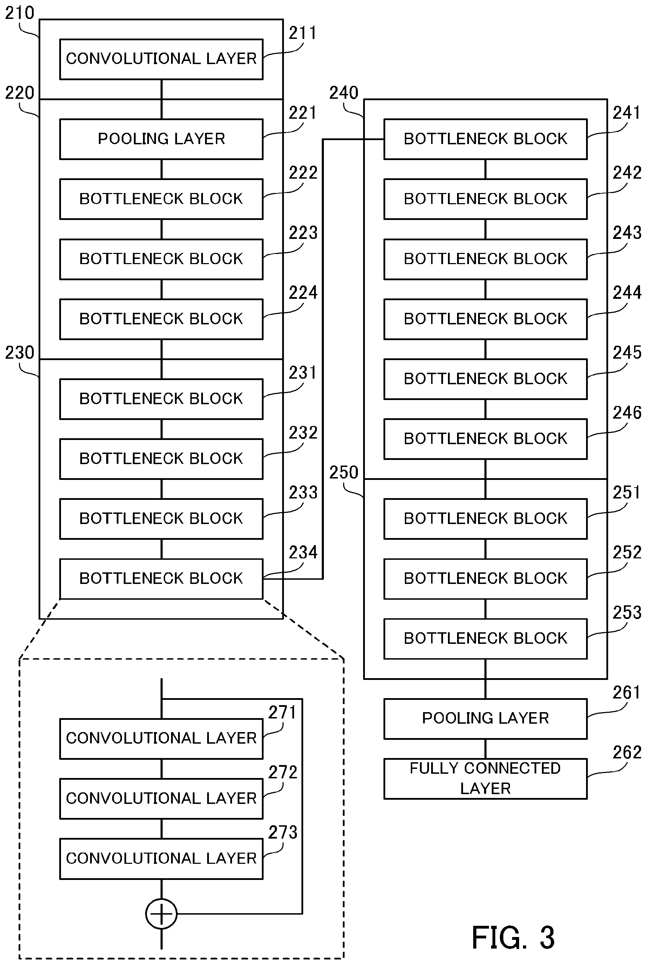

FIG. 3 illustrates a structural example of a multilayer neural network.

A model according to the second embodiment is a multilayer convolutional neural network for image recognition. This model used as an example in FIG. 3 may be referred to as ResNet-50. However, skip control, which will be described below, is applicable to various multilayer neural networks, and the model is not limited to ResNet-50.

The model in FIG. 3 includes blocks 210, 220, 230, and 240, and 250 connected in series. The block 210 is the initial block, which receives an input image. The block 220 is the next block of the block 210, and the block 230 is the next block of the block 220. The block 240 is the next block of the block 230, and the block 250 is the next block of the block 240.

The block 210 includes a convolutional layer 211. In the convolutional layer 211, the information processing apparatus 100 performs a convolution operation. More specifically, the information processing apparatus 100 repeats a product-sum operation while shifting a filter referred to as a kernel. The kernel size is, for example, 7 × 7. The output of the convolutional layer 211 may be referred to as a feature map. In the convolutional layer 211, 2 is set as the stride, which indicates a single shift amount of the kernel. Thus, the height and the width of the feature map outputted by the convolutional layer 211 are 1/2 of those of the input image.

The block 220 includes a pooling layer 221 and bottleneck blocks 222, 223, and 224 connected in series. In the pooling layer 221, the information processing apparatus 100 performs a pooling operation in which a predetermined number of neighboring elements is synthesized into a single element. For example, in the pooling layer 221, the information processing apparatus 100 calculates a single element from a 3 × 3 square area. The pooling operation performed in the pooling layer 221 is, for example, max pooling in which a maximum value is selected from 3 × 3 elements. In the pooling layer 221, 2 is set as the stride. Thus, the height and the width of the output of the pooling layer 221 are 1/2 of those of the input of the pooling layer 221.

In each of the bottleneck blocks 222, 223, and 224, a plurality of convolution operations are consecutively performed on a corresponding input, and the result of these convolution operations and the original input are synthesized and outputted. Each of the bottleneck blocks 222, 223, and 224 includes convolutional layers 271, 272, and 273 connected in series. In each of the convolutional layers 271, 272, and 273, a convolution operation is performed. The stride in the convolutional layers 272 and 273 is 1. Thus, the heights and the widths of the outputs of the convolutional layers 272 and 273 are the same as those of their inputs.

By contrast, the stride in the convolutional layer 271 may be 1 or 2. If 1 is set as the stride, the height and the width of the output of the convolutional layer 271 is the same as those of its input. If 2 is set as the stride, the height and the width of the output of the convolutional layer 271 are 1/2 of those of its input. In each of the bottleneck blocks 222, 223, and 224, 1 is set as the stride of the individual convolutional layer, and therefore, the height and the width of the input will not be changed. Finally, the original input is added to the output of the convolutional layer 273.

The block 230 includes bottleneck blocks 231, 232, 233, and 234 connected in series. The bottleneck blocks 231, 232, 233, and 234 are configured in the same way as the block 220. However, 2 is set as the stride in the convolutional layer 271 of the bottleneck block 231, and 1 is set as the stride in the other convolutional layers. Thus, the height and the width of the output of the block 230 are 1/2 of those of its input.

The block 240 includes bottleneck blocks 241, 242, 243, 244, 245, and 246 connected in series. The bottleneck blocks 241, 242, 243, 244, 245, and 246 are configured in the same way as the blocks 220 and 230. However, 2 is set as the stride in the convolutional layer 271 of the bottleneck block 241, and 1 is set as the stride in the other convolutional layers. Thus, the height and the width of the output of the block 240 are 1/2 of those of its input.

The block 250 includes bottleneck blocks 251, 252, and 253 connected in series. The bottleneck blocks 251, 252, and 253 are configured in the same way as the blocks 220, 230, and 240. However, 2 is set as the stride in the convolutional layer 271 of the bottleneck block 251, and 1 is set as the stride in the other convolutional layers. Thus, the height and the width of the output of the block 250 are 1/2 of those of its input.

As described above, the group of the blocks 210, 220, 230, and 240, and 250 includes 16 bottleneck blocks and 2 other layers, that is, 50 layers in total. After the block 250, a pooling layer 261 and a fully connected layer 262 are connected in series.

In the pooling layer 261, the information processing apparatus 100 performs a pooling operation. The pooling operation performed in the pooling layer 261 is, for example, average pooling in which an average value of a predetermined number of neighboring elements is calculated. In the fully connected layer 262, the information processing apparatus 100 performs a fully connected operation. More specifically, the information processing apparatus 100 calculates numerical values from all the elements outputted from the pooling layer 261, without storing an adjacency relationship between elements. In the fully connected layer 262, the information processing apparatus 100 calculates a score for each of the classes of recognizable objects (for example, 1,000 classes). The score for a class indicates the probability that an object captured in the input image belongs to this class.

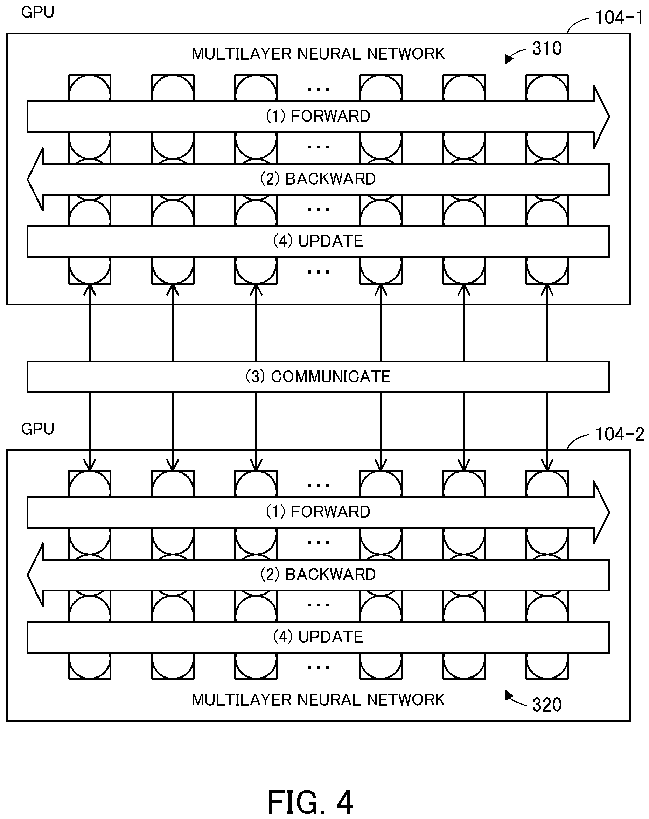

FIG. 4 illustrates an example of learning phases in machine learning.

The following description assumes, for simplicity, that machine learning is performed in a parallel manner by using the two GPUs 104-1 and 104-2. The information processing apparatus 100 is able to perform machine learning in a parallel manner by using more than two GPUs.

The GPU 104-1 holds a multilayer neural network 310. The GPU 104-2 holds a multilayer neural network 320, which has the same configuration as that of the multilayer neural network 310. Each of the multilayer neural networks 310 and 320 is the multilayer convolutional neural network illustrated in FIG. 3, for example.

Each of the multilayer neural networks 310 and 320 includes a plurality of layers. In each layer, a plurality of nodes are arranged. Each layer may include a different number of nodes. If there is a different layer ahead of one layer, a node in this one layer has edges between this node and the nodes in the different layer. If there is a different layer behind one layer, a node in this one layer has edges between this node and the nodes in the different layer. Each edge is provided with a weight. The weight is a parameter whose value is determined through machine learning. The weight of the edge between a node in one layer and a node in the previous layer may be considered as a parameter included in the one layer. Alternatively, the weight of the edge between a node in one layer and a node in the subsequent layer may be considered as a parameter included in the one layer.

Machine learning that generates an image recognition model uses training data including a plurality of samples, and in each sample, an image and a correct label indicating an object class are associated with each other. The GPUs 104-1 and 104-2 perform high-speed machine learning by processing different samples in a parallel manner.

The machine learning includes a predetermined number of epochs. For example, the machine learning that generates the multilayer convolutional neural network in FIG. 3 includes 50 to 60 epochs. Each epoch includes a predetermined number of iterations. For example, each epoch includes 760 iterations. Between epochs, validation is performed to evaluate the prediction accuracy of each of the multilayer neural networks 310 and 320 at the time. As the index of the prediction accuracy, accuracy may be used. Accuracy is the ratio of the number of successfully predicted samples to the number of test samples.

Normally, different samples included in the training data are used in different iterations in a single epoch. The same samples may be used again in iterations in different epochs. In the same iteration, different GPUs use different samples. The sample use method according to the second embodiment is online learning or mini-batch learning. In online learning, a single GPU uses a single sample in a single iteration. In mini-batch learning, a single GPU uses a predetermined number of samples, e.g., a few dozen samples, in a single iteration.

The individual iteration in this parallelized machine learning includes four phases of a FORWARD phase, a BACKWARD phase, a COMMUNICATE phase, and an UPDATE phase. In the FORWARD phase, the GPU 104-1 enters an image to the initial layer (the input layer) of the multilayer neural network 310. Next, numerical calculation is consecutively performed from the input layer to the last layer (the output layer) of the multilayer neural network 310, and a prediction result is outputted from the output layer. The GPU 104-1 calculates an error between the prediction result and the corresponding correct label. For example, the GPU 104-1 compares a perdition vector in which scores for a plurality of classes are listed with a correct vector in which a value corresponding to the correct class is 1 and values corresponding to the other classes are 0. Next, the GPU 104-1 calculates, as the error, the square-root of the sum of the squares of the difference between the individual two vectors. In mini-batch learning, the GPU 104-1 calculates the average of the errors of a predetermined number of samples.

The following description will be made with a focus on one node. By multiplying the output values of a plurality of nodes belonging to the previous layer of the one node by the weights of the corresponding edges and adding up the products, the GPU 104-1 calculates a weighted-sum of the output values of the previous layer. The GPU 104-1 calculates the output value of the one node by entering this weighted sum to an activation function. The activation function may be a sigmoid function, a ramp function, a softmax function, or the like. The activation function may be specified by a user as a hyperparameter. The GPU 104-1 provides a plurality of nodes belonging to the subsequent layer with the output value of the one node. In this way, in the FORWARD phase, numerical values are propagated from the input layer to the output layer. In parallel with the GPU 104-1, the GPU 104-2 executes the FORWARD phase on the multilayer neural network 320.

In the BACKWARD phase, the GPU 104-1 calculates the error gradients of the weights of the individual edges in the backward order from the output layer to the input layer of the multilayer neural network 310. When the error is considered as a function of the weights, the individual error gradient corresponds to a value obtained by partially differentiating the error by the corresponding weight. The individual error gradient represents the change amount of the error when the weight of the corresponding edge is changed only by a minute amount. These error gradients are used to update the weights of the edges in such a manner that the error is reduced. As an algorithm to calculate the error gradients, backpropagation is used.

The following description will be made with a focus on an edge between a node #1 and a node #2 subsequent thereto. The GPU 104-1 calculates the error gradient of the weight of the edge by using the following information, namely, the current weight and error gradient of an edge between the node #2 and a node subsequent thereto, the output value of the node #2 calculated in the FORWARD phase, the output value of the node #1 calculated in the FORWARD phase, an activation function, etc. The GPU 104-1 sequentially calculates the error gradients, starting with those close to the output layer. In parallel with the GPU 104-1, the GPU 104-2 executes the BACKWARD phase on the multilayer neural network 320.

In the COMMUNICATE phase, the GPUs 104-1 and 104-2 communicate with each other, to add up, per edge, the error gradients calculated in the BACKWARD phase. Next, each of the GPUs 104-1 and 104-2 divides the sum of error gradients of an individual edge, which has been calculated from the different samples, by the number of GPUs, to calculate the average of the error gradients. The same average of error gradients is calculated by the GPUs 104-1 and 104-2. For the communication between the GPUs 104-1 and 104-2, MPI (Message Passing Interface) collective communication may be used. For example, AllReduce communication may be used.

The COMMUNICATE phase may be executed in the order from the input layer to the output layer or from the output layer to the input layer. Since the BACKWARD phase progresses in one direction from the output layer to the input layer, before the BACKWARD phase is completed, the COMMUNICATE phase may be started on the layers whose error gradients have already been calculated.

In the UPDATE phase, the GPU 104-1 updates the weights of the individual edges in the multilayer neural network 310 by using the error gradients calculated in the COMMUNICATE phase. In this UPDATE phase, instead of subtracting the error gradients from their respective current weights, the GPU 104-1 converts the error gradients into subtraction values and subtracts the subtraction values from their respective current weights. The GPU 104-1 uses a learning rate, which is a hyperparameter, to convert the error gradients into the subtraction values.

A shared learning rate may be set for all the blocks 210, 220, 230, and 240, and 250. Alternatively, a different learning rate may be set for each of the blocks 210, 220, 230, and 240, and 250. According to the second embodiment, as will be described below, when the number of executed epochs reaches a threshold, the learning rate is automatically dropped. When the learning rate is larger, the impact of the most recent sample is reflected on the weights more strongly. When the learning rate is smaller, the impact of the most recent sample is reflected on the weights more weakly. For example, the GPU 104-1 uses a value obtained by multiplying an error gradient by the learning rate as a subtraction value. In this case, assuming that w denotes a weight that has not been updated, w' denotes a weight that has been updated, Δw denotes an error gradient, and η denotes a learning rate, w' = w - η × Δw is defined.

In parallel with the GPU 104-1, the GPU 104-2 executes the UPDATE phase on the multilayer neural network 320. The UPDATE phase may be performed in the order from the input layer to the output layer or from the output layer to the input layer.

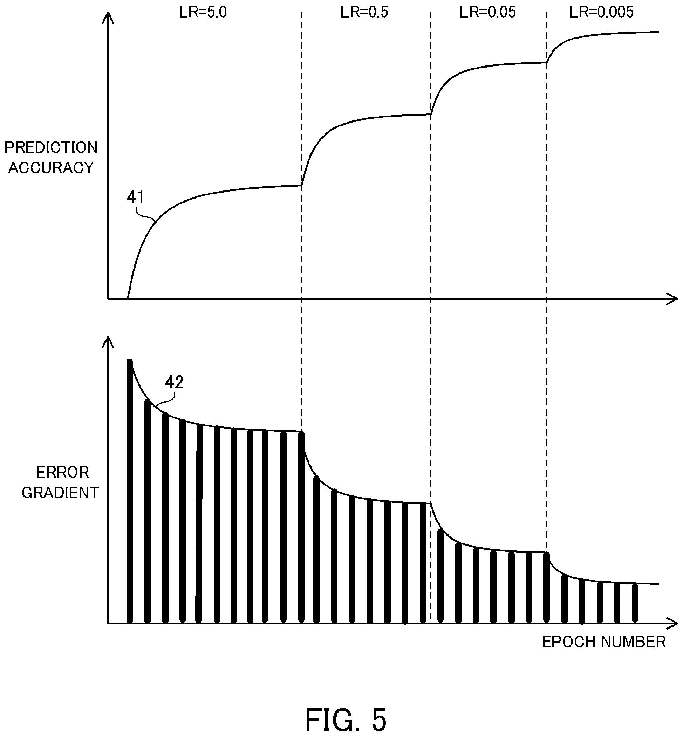

FIG. 5 is a graph illustrating an example of change of the prediction accuracy and an error gradient in the machine learning.

When the above machine learning described in FIG. 4 is performed, the prediction accuracy of the model could change as indicated by a curve 41. The curve 41 indicates the prediction accuracy calculated by validation performed between epochs. In FIG. 5, accuracy is used as the index of the prediction accuracy. In addition, when the machine learning described in FIG. 4 is performed, an error gradient could change as indicated by a curve 42. The curve 42 indicates an average of the absolute values of the error gradients calculated for all the weights.

First, the information processing apparatus 100 sets 5.0 as the learning rate (LR). In the initial period after 5.0 is set as the learning rate, as the epoch number rises, the prediction accuracy significantly improves and the error gradient significantly drops. However, if the weights are repeatedly updated under the same learning rate, the individual weight will start to vary within a region around its optimum value and will not come any closer to its optimum value. Thus, there is a limit to the improvement of the prediction accuracy and the drop of the error gradient. As a result, the prediction accuracy could monotonically increase and change in accordance with a curve that is convex upward, and the error gradient could monotonically decrease and change in accordance with a curve that is convex downward.

Thus, when the number of executed epochs reaches a predetermined number, the information processing apparatus 100 drops the learning rate. For example, when the number of epochs reaches 30, the information processing apparatus 100 changes the learning rate to 0.5, which is 1/10 of the initial value. When the learning rate has been changed to 0.5, along with the rise in the number of epochs, the prediction accuracy improves greatly and the error gradient drops greatly again. This is because this reduction of a single update amount of an individual weight makes it easier for the weight to come close to its optimum value, compared with the case where 5.0 is set as the learning rate. However, as with the case where 5.0 is set as the learning rate, there is a limit to the improvement of the prediction accuracy and the drop of the error gradient if the learning rate remains at 0.5.

Thus, when the number of executed epochs reaches a predetermined number, the information processing apparatus 100 drops the learning rate again. For example, the information processing apparatus 100 further drops the learning rate to 1/10, i.e., 0.05. Likewise, when the number of executed epochs reaches a predetermined number, the information processing apparatus 100 further drops the learning rate to 1/10, i.e., 0.005. In this way, the information processing apparatus 100 drops the learning rate step by step based on the number of epochs.

Next, improvement in the efficiency of machine learning will be described. The curve 42 indicates that the average of the error gradients of all the layers included in the model monotonically decreases. However, the error gradients of all the layers do not always converge evenly. That is, the error gradients of different layers could converge at different timing.

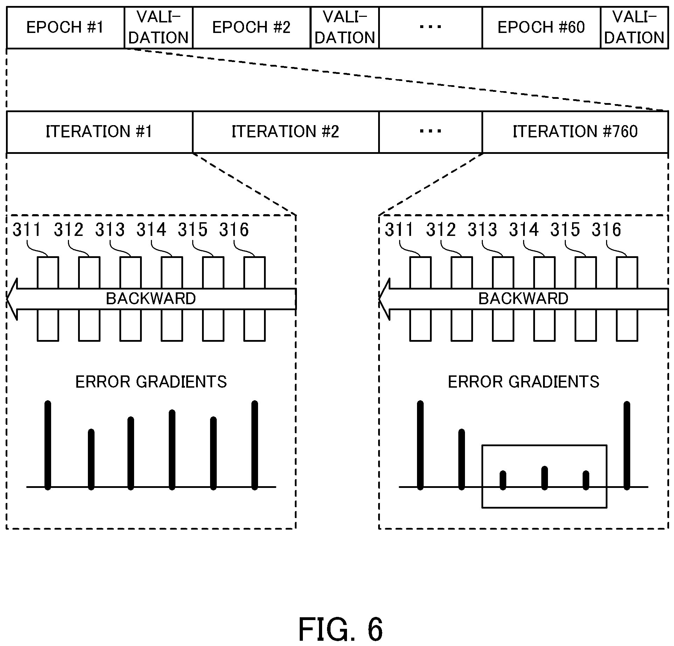

FIG. 6 illustrates an example in which the error gradients of a plurality of layers converge at different timing.

The multilayer neural network 310 includes layers 311, 312, 313, 314, 315, and 316. In the above description made with reference to FIG. 4, the GPU 104-1 performs the BACKWARD phase, the COMMUNICATE phase, and the UPDATE phase for all the layers in each iteration. In an iteration #1 of an epoch #1, the GPU 104-1 calculates the error gradients of the layers 311, 312, 313, 314, 315, and 316. In addition, in an iteration #760 of the epoch #1, the GPU 104-1 calculates the error gradients of the layers 311, 312, 313, 314, 315, and 316.

Herein, "the error gradient of a layer" illustrated in FIG. 6 is the average of the absolute values of the plurality of error gradients corresponding to the plurality of weights included in the layer. In the iteration #1 of the epoch #1, all the error gradients of the layers 311, 312, 313, 314, 315, and 316 are large. By contrast, in the iteration #760 of the epoch #1, while the error gradients of the layers 311, 312, and 316 are still large, the error gradients of the layers 313, 314, and 315 are small.

In this way, after a new learning rate is set, as the number of iterations rises, the error gradients in some of the plurality of layers included in the model could converge earlier than the other layers. In the case of a multilayer convolutional neural network, the error gradient of a layer (a forward layer) closer to the input layer could converge earlier than a layer (a backward layer) closer to the output layer. The weights of layers whose error gradients have already converged could not come any closer to their optimum values, even if more iterations are performed under the same learning rate. Thus, these layers whose error gradients have already converged could be considered as layers that will not be learned substantially.

In each iteration, if the BACKWARD phase, the COMMUNICATE phase, and the UPDATE phase are performed on all the layers including those layers whose error gradients have already converged, unnecessary processing, which does not contribute to improvement of the prediction accuracy, occurs, resulting in an excessive calculation amount. To solve this problem, the information processing apparatus 100 may skip the processing of some of the layers. The processing in the BACKWARD phase, the COMMUNICATE phase, and the UPDATE phase is skipped.

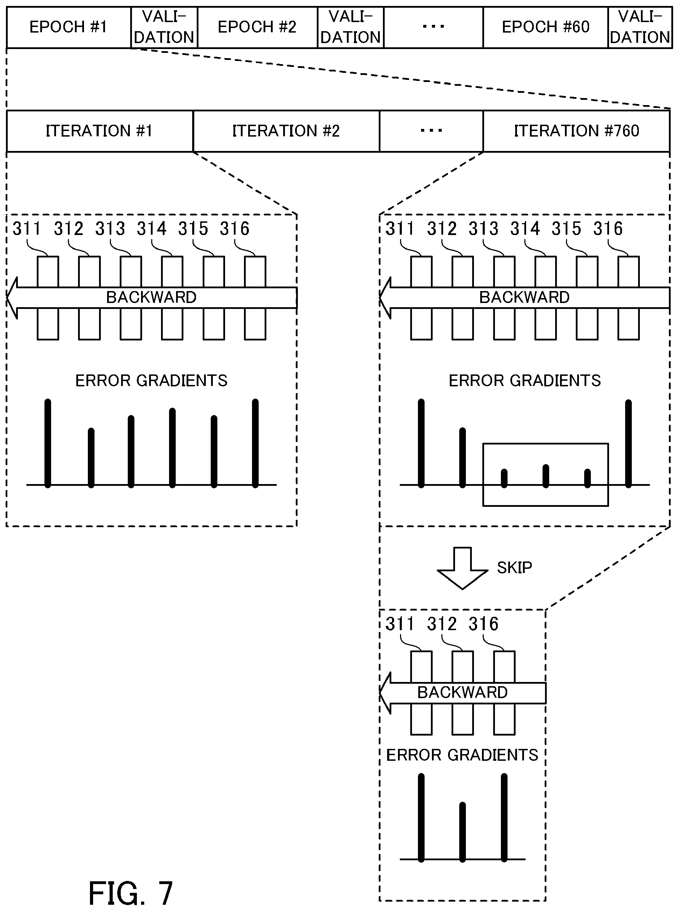

FIG. 7 illustrates an example in which updating parameters in some layers is skipped.

In the iteration #1 of the epoch #1, none of the layers 311, 312, 313, 314, 315, and 316 are specified as skip targets. Thus, the GPU 104-1 performs the FORWARD phase, the BACKWARD phase, the COMMUNICATE phase, and the UPDATE phase on the layers 311, 312, 313, 314, 315, and 316. Thereafter, the GPU 104-1 monitors the error gradients of the layers 311, 312, 313, 314, 315, and 316 and detects layers whose error gradients have converged. The following description assumes that the error gradients of the layers 311, 312, and 316 have not converged yet and that the error gradients of the layers 313, 314, 315 have already converged. Accordingly, the GPU 104-1 specifies the layers 313, 314, and 315 as skip targets.

Herein, the GPU 104-1 detects the layers whose error gradients have converged, based on the error gradients calculated in the BACKWARD phase. In parallel with the GPU 104-1, the GPU 104-2 detects the layers whose error gradients have converged, based on the error gradients calculated in the BACKWARD phase. The GPUs 104-1 and 104-2 mutually exchange their detection results of the error gradients that have converged in the COMMUNICATE phase, to determine common skip target layers (skip layers).

If at least one GPU determines that the error gradient of a layer has converged, this layer may be determined as a skip layer. Alternatively, if all the GPUs determine that the error gradient of a layer has converged, this layer may be determined as a skip layer. Alternatively, if the number or rate of GPUs that have determined that the error gradient of a layer has converged is equal to or more than a threshold, this layer may be determined as a skip layer. The GPUs 104-1 and 104-2 may determine a common skip layer, based on the average of the error gradients calculated in the COMMUNICATE phase.

In the iteration #760 of the epoch #1, the GPU 104-1 performs the FORWARD phase on the layers 311, 312, 313, 314, 315, and 316. In addition, the GPU 104-1 performs the BACKWARD phase, the COMMUNICATE phase, and the UPDATE phase on the layers 311, 312, and 316. However, the GPU 104-1 omits the BACKWARD phase, the COMMUNICATE phase, and the UPDATE phase on the layers 313, 314, and 315.

By omitting the BACKWARD phase, the COMMUNICATE phase, and the UPDATE phase of some of the layers, the calculation amount and the communication amount in a single iteration are reduced. As a result, the execution time in the iteration is shortened. To calculate the error gradients of the layer 312, the error gradients of the subsequent layer 313 are used. If the layer 313 is a skip layer, the GPU 104-1 uses the error gradients finally calculated for the layer 313 for the calculation of the error gradients of the layer 312. Thus, when the layer 313 is specified as a skip layer, the GPU 104-1 stores the finally calculated error gradients of the individual weights of the layer 313.

Next, whether an error gradient has converged will be described.

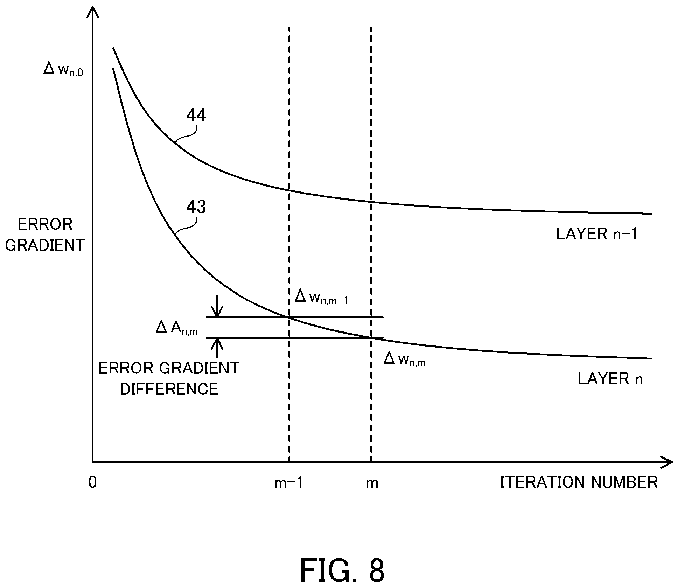

FIG. 8 is a graph illustrating an example of calculation of an error gradient difference.

A curve 43 indicates change of the error gradient of the nth layer (a layer n) in the multilayer neural network 310. A curve 44 indicates change of the error gradient of the (n-1)th layer (a layer n-1) over time. The horizontal axis in FIG. 8 represents the iteration number. In FIG. 8, the iteration number = 0 corresponds to the iteration immediately after setting of a new learning rate. Even if the epoch changes, the iteration number on the horizontal axis in FIG. 8 is not reset unless the learning rate changes. Thus, the iteration number on the horizontal axis in FIG. 8 may represent 760 or more.

The following description will be made on a case where the GPU 104-1 determines whether to specify the layer n as a skip layer in an iteration m. In an iteration m-1, the GPU 104-1 records an error gradient Δw_{n,m-1} of the layer n. In the iteration m, the GPU 104-1 calculates an error gradient Δw_{n,m} of the layer n and calculates an error gradient difference ΔA_{n,m} = Δw_{n,m-1} - Δw_{n,m} by subtracting the error gradient in the iteration m from the error gradient in the iteration m-1.

In addition, the GPU 104-1 records an error gradient Δw_{n,0} (initial error gradient) of the layer n in an iteration 0 that is immediately after setting of the new learning rate. The GPU 104-1 calculates a threshold based on the error gradient Δw_{n,0}. For example, the GPU 104-1 calculates 5% of the initial error gradient, namely, 0.05 × Δw_{n,0}, as the threshold. The magnification ratio of the initial error gradient may be a user-specified hyperparameter.

The GPU 104-1 determines whether the error gradient difference ΔA_{n,m} is less than the threshold. If the error gradient difference ΔA_{n,m} is equal to or more than the threshold, the GPU 104-1 performs the BACKWARD phase, the COMMUNICATE phase, and the UPDATE phase on the layer n in an iteration m+1, without specifying the layer n as a skip layer. By contrast, if the error gradient difference ΔA_{n,m}, is less than the threshold, the GPU 104-1 specifies the layer n as a skip layer and omits the BACKWARD phase, the COMMUNICATE phase, and the UPDATE phase on the layer n in the iteration m+1 and thereafter.

The GPU 104-1 determines whether to specify the layer n-1 as a skip layer, as it does on the layer n. As indicated by the curves 43 and 44, there are cases where the error gradient of the layer n-1 converges earlier than that of the layer n. Thus, the layer n-1 could be specified as a skip layer earlier than the layer n. When the learning rate is changed, the GPU 104-1 cancels the specification of the skip layers.

Next, functions and a processing procedure of the information processing apparatus 100 will be described.

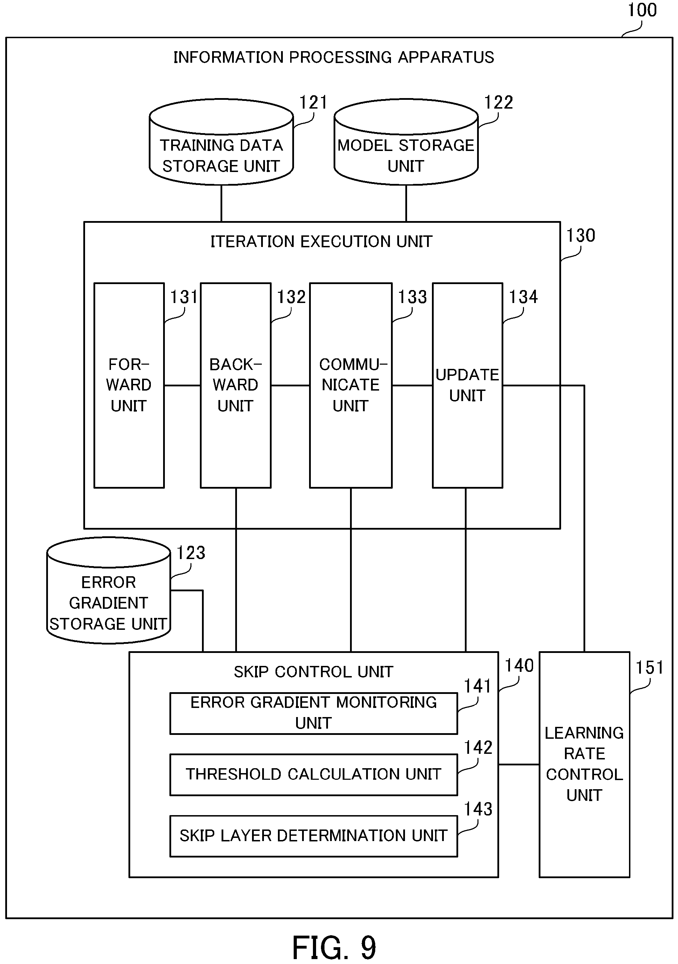

FIG. 9 is a block diagram illustrating a functional example of the information processing apparatus.

The information processing apparatus 100 includes a training data storage unit 121, a model storage unit 122, and an error gradient storage unit 123. These storage units are realized by using storage areas in the GPU memory 105, for example. Storage areas in the RAM 102 may alternatively be used for the above storage units. The information processing apparatus 100 also includes an iteration execution unit 130, a skip control unit 140, and a learning rate control unit 151. These processing units are realized by using programs executed by the GPUs 104-1 and 104-2, 104-3, 104-4, for example. Programs executed by the CPU 101 may alternatively be used for the above units.

The training data storage unit 121 holds training data. The training data includes a plurality of samples. Each sample includes input data and a correct label. For example, the input data is an image, and the correct label is a label indicating a class of an object captured in the image. The model storage unit 122 holds a multilayer neural network. The multilayer neural network is, for example, the multilayer convolutional neural network in FIG. 3. The error gradient storage unit 123 holds the error gradients in the individual layers calculated during machine learning.

The iteration execution unit 130 repeatedly executes an iteration to update the weights of the multilayer neural network stored in the model storage unit 122. The iteration execution unit 130 counts the iterations that have been executed and extracts appropriate samples from the training data stored in the training data storage unit 121. In addition, the iteration execution unit 130 counts the epochs and determines whether to stop the machine learning.

The iteration execution unit 130 includes a FORWARD unit 131, a BACKWARD unit 132, a COMMUNICATE unit 133, and an UPDATE unit 134. The FORWARD unit 131 executes the above FORWARD phase. In the FORWARD phase, different GPUs are able to process different samples in a parallel manner. After the FORWARD phase, the BACKWARD unit 132 executes the above BACKWARD phase. In the BACKWARD phase, a plurality of GPUs operate in a parallel manner. However, the processing of some of the layers could be skipped in accordance with an instruction from the skip control unit 140.

After the BACKWARD phase, the COMMUNICATE unit 133 executes the above COMMUNICATE phase. In the COMMUNICATE phase, a plurality of GPUs perform collective communication such as AllReduce communication. However, the processing of some of the layers could be skipped in accordance with an instruction from the skip control unit 140. After the COMMUNICATE phase, the UPDATE unit 134 executes the above UPDATE phase. The learning rate used in the UPDATE phase is specified by the learning rate control unit 151. The plurality of GPUs may execute the UPDATE phase in a parallel manner. However, the processing of some of the layers could be skipped in accordance with an instruction from the skip control unit 140.

The skip control unit 140 specifies a layer that has not been learned substantially as a skip layer and notifies the BACKWARD unit 132, the COMMUNICATE unit 133, and the UPDATE unit 134 of this skip layer.

The skip control unit 140 includes an error gradient monitoring unit 141, a threshold calculation unit 142, and a skip layer determination unit 143. The error gradient monitoring unit 141 acquires, from the BACKWARD unit 132, the error gradients of the weights of the individual edges per iteration. The error gradient monitoring unit 141 calculates the error gradients of the individual layers and registers the calculated error gradients in the error gradient storage unit 123. In addition, the error gradient monitoring unit 141 calculates an error gradient difference per layer and provides the skip layer determination unit 143 with the calculated error gradient difference. In addition, the error gradient monitoring unit 141 provides the threshold calculation unit 142 with the initial error gradients of the individual layers.

Each time a new learning rate is set, the threshold calculation unit 142 calculates, per layer, a threshold based on the corresponding initial error gradient provided by the error gradient monitoring unit 141. The threshold is, for example, a value obtained by multiplying the initial error gradient by a ratio (for example, 5%) specified by the user as a hyperparameter. The threshold calculation unit 142 notifies the skip layer determination unit 143 of the thresholds of the individual layers. The skip layer determination unit 143 compares, per iteration and per layer, an error gradient difference provided by the error gradient monitoring unit 141 with a corresponding threshold provided by the threshold calculation unit 142. The skip layer determination unit 143 determines a layer whose error gradient difference is less than the corresponding threshold.

The skip layer determination unit 143 gives an instruction to the COMMUNICATE unit 133 so that information about the layer whose error gradient difference is less than the corresponding threshold is shared by the GPUs. The skip layer determination unit 143 specifies the layer whose error gradient difference is less than the corresponding threshold as a skip layer, based a predetermined voting algorithm. If all the GPUs determine that the error gradient difference of a layer is less than the corresponding threshold, this layer may be determined as a skip layer. Alternatively, if at least one GPU determines that the error gradient difference of a layer is less than the corresponding threshold, this layer may be determined as a skip layer. Alternatively, if a majority of GPUs determine that the error gradient difference of a layer is less than the corresponding threshold, this layer may be determined as a skip layer. The skip layer determination unit 143 notifies the BACKWARD unit 132, the COMMUNICATE unit 133, and the UPDATE unit 134 of the layer specified as a skip layer.

The learning rate control unit 151 notifies the UPDATE unit 134 of the initial learning rate specified by the user as a hyperparameter. In addition, the learning rate control unit 151 counts the executed epochs and changes the learning rate when the number of executed epochs reaches a predetermined number. For example, when changing the current learning rate, the learning rate control unit 151 drops the learning rate to 1/10. Next, the learning rate control unit 151 notifies the UPDATE unit 134 of the new learning rate.

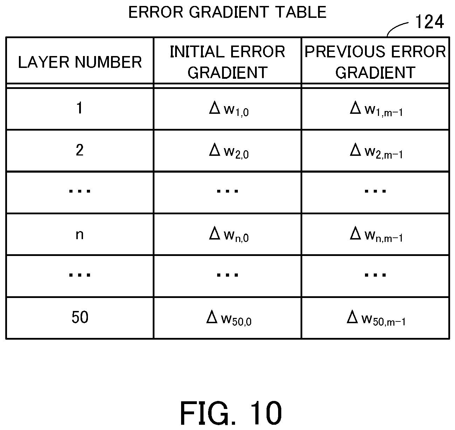

FIG. 10 illustrates an example of an error gradient table.

An error gradient table 124 is stored in the error gradient storage unit 123. The layer numbers, the initial error gradients, and the previous error gradients of 50 layers are registered in the error gradient table 124. The layer numbers are identification numbers for identifying the layers. The initial error gradients are the error gradients calculated in an iteration immediately after a new learning rate (an initial learning rate or a newly changed learning rate) is set. The previous error gradients are the error gradients calculated in the previous iteration.

Before the error gradients in the iteration m are calculated, the error gradients in the iteration m-1 are registered as the previous error gradients in the error gradient table 124. After the error gradients in the iteration m are calculated, the error gradients in the iteration m-1 in the error gradient table 124 are overwritten with the error gradients in the iteration m as the previous error gradients. At this point, the difference between an error gradient in the iteration m-1 and a corresponding error gradient in the iteration m is calculated as an error gradient difference. The error gradient of the individual layer registered in the error gradient table 124 is calculated as the average of the absolute values of the plurality of error gradients corresponding to the plurality of weights included in this layer from the result of the BACKWARD phase.

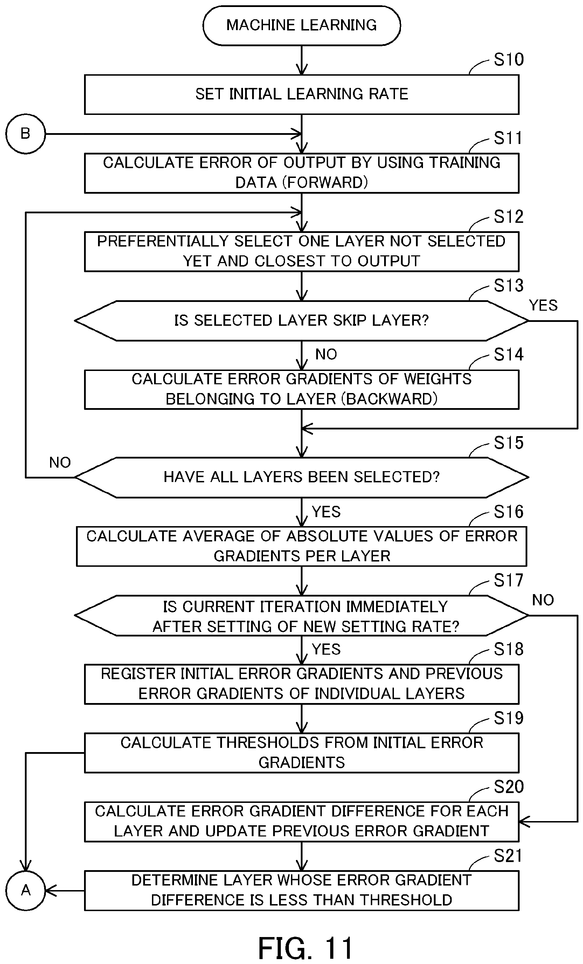

FIG. 11 is the first half of a flowchart illustrating an example of a procedure of the machine learning.

The procedure for the machine learning is performed in a parallel manner by a plurality of GPUs, for example.

(S10) The learning rate control unit 151 sets an initial learning rate.

(S11) The iteration execution unit 130 extracts a sample from the training data. The FORWARD unit 131 performs the FORWARD phase by using the extracted sample. In the FORWARD phase, the FORWARD unit 131 enters the input data included in the sample to the model and calculates an error between the correct label included in sample and the output of the model.

(S12) The BACKWARD unit 132 preferentially selects one layer that has not been selected yet and that is closest to the output.

(S13) The BACKWARD unit 132 determines whether the layer selected in step S12 is specified as a skip layer. If the selected layer is a skip layer, the processing proceeds to step S15. If not, the processing proceeds to step S14.

(S14) The BACKWARD unit 132 performs the processing in the BACKWARD phase on the selected layer. In this step, the BACKWARD unit 132 performs backpropagation to calculate the error gradients of the weights of the edges belonging to the selected layer. If the subsequent layer is a skip layer, the error gradients of the weights of the edges belonging to the subsequent layer have not been calculated in the current iteration. In this case, the BACKWARD unit 132 reads and uses the error gradients calculated last for the subsequent layer.

(S15) The BACKWARD unit 132 determines whether all the layers have been selected in step S12, namely, whether the initial layer in the model has been reached. If all the layers have been selected, the processing proceeds to step S16. If not, the processing returns to step S12.

(S16) The error gradient monitoring unit 141 acquires the error gradients of the weights of the individual edges calculated by the BACKWARD unit 132. The error gradient monitoring unit 141 classifies the acquired error gradients according to layers and calculates the average of the absolute values of the error gradients of an individual layer as the error gradient of the layer.

(S17) The error gradient monitoring unit 141 determines whether the current iteration is an iteration (the iteration 0) immediately after setting of a new learning rate. If the current iteration is the iteration 0, the processing proceeds to step S18. If not, the processing proceeds to step S20.

(S18) The error gradient monitoring unit 141 registers the error gradients of the individual layers calculated in step S16 in the error gradient table 124 as the initial error gradients and the previous error gradients.

(S19) The threshold calculation unit 142 calculates thresholds from the initial error gradients. For example, the threshold calculation unit 142 defines 5% of an initial error gradient as a corresponding threshold. Next, the processing proceeds to step S22.

(S20) The error gradient monitoring unit 141 calculates, per layer, an error gradient difference by subtracting an error gradient calculated in step S16 from the corresponding previous error gradient registered in the error gradient table 124. In addition, the error gradient monitoring unit 141 overwrites the error gradient table 124 with the error gradients calculated in step S16 as the previous error gradients.

(S21) The skip layer determination unit 143 determines, from the plurality of layers, a layer whose error gradient difference calculated in step S20 is less than the corresponding threshold calculated by the threshold calculation unit 142.

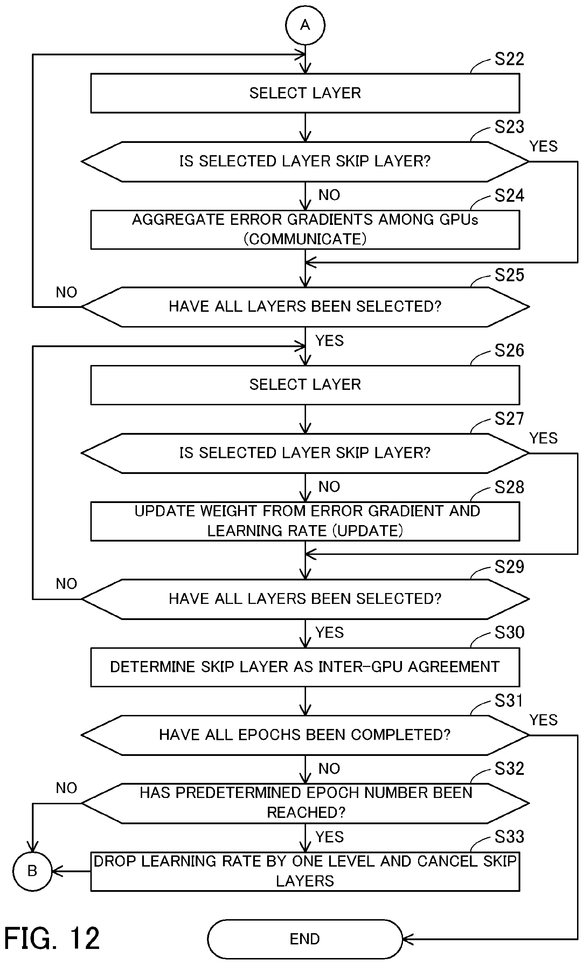

FIG. 12 is the second half of the flowchart illustrating the example of the procedure of the machine learning.

(S22) The COMMUNICATE unit 133 selects a layer.

(S23) The COMMUNICATE unit 133 determines whether the layer selected in step S22 is specified as a skip layer. If the selected layer is a skip layer, the processing proceeds to step S25. If not, the processing proceeds to step S24.

(S24) The COMMUNICATE unit 133 performs the processing in the COMMUNICATE phase on the selected layer. In this step, the COMMUNICATE unit 133 performs inter-GPU AllReduce communication to add up the error gradients calculated by the plurality of GPUs per edge weight. The COMMUNICATE unit 133 divides the sum of the error gradients by the number of GPUs, to calculate the average of the error gradients. In this way, the error gradients are aggregated among the plurality of GPUs. In addition, the COMMUNICATE unit 133 performs the inter-GPU communication to gather information about a layer whose error gradient difference is less than the threshold.

(S25) The COMMUNICATE unit 133 determines whether all the layers have been selected in step S22. If all the layers have been selected, the processing proceeds to step S26. If not, the processing returns to step S22. The COMMUNICATE unit 133 may perform the selection from the plurality of layers in the forward direction (from the input layer to the output layer) or in the backward direction (from the output layer to the input layer). The COMMUNICATE unit 133 may perform the COMMUNICATE phase on the plurality of layers in a parallel manner.

(S26) The UPDATE unit 134 selects a layer.

(S27) The UPDATE unit 134 determines whether the layer selected in step S26 is specified as a skip layer. If the selected layer is a skip layer, the processing proceeds to step S29. If not, the processing proceeds to step S28.

(S28) The UPDATE unit 134 performs the processing in the UPDATE phase on the selected layer. In this step, the UPDATE unit 134 updates the individual edge weight belonging to the selected layer based on the error gradient aggregated in the COMMUNICATE phase and the current learning rate. For example, the UPDATE unit 134 calculates a subtraction value by multiplying the error gradient by the learning rate and subtracts the subtraction value from the current weight.

(S29) The UPDATE unit 134 determines whether all the layers have been selected in step S26. If all the layers have been selected, the processing proceeds to step S30. If not, the processing returns to step S26. The UPDATE unit 134 may perform the selection from the plurality of layers in the forward direction (from the input layer to the output layer) or in the backward direction (from the output layer to the input layer).

(S30) The skip layer determination unit 143 determines a skip layer under an inter-GPU agreement, based on the information gathered in step S24. If the GPUs agree that the error gradient difference of a layer is less than the corresponding threshold, the skip layer determination unit 143 specifies this layer as a skip layer. If the GPUs do not reach agreement, the skip layer determination unit 143 determines whether to specify an individual layer as a skip layer in accordance with a predetermined voting algorithm.

(S31) The iteration execution unit 130 determines whether all the epochs have been completed by the current iteration. For example, the iteration execution unit 130 determines whether 760 iterations × 60 epochs have been completed. If all the epochs have been completed, the machine learning is stopped. If not, the processing proceeds to step S32.

(S32) The learning rate control unit 151 determines whether a predetermined epoch number has been reached. A plurality of predetermined epoch numbers may be set. If the predetermined epoch number has been reached, the processing proceeds to step S33. If not, the processing returns to step S11.

(S33) The learning rate control unit 151 drops the learning rate by one level. For example, the learning rate control unit 151 drops the current learning rate to 1/10. After the change of the learning rate, the skip layer determination unit 143 cancels the specification of the skip layers. Consequently, the BACKWARD phase, the COMMUNICATE phase, and the UPDATE phase are performed on all the layers in the next iteration. Next, the processing returns to step S11.

The information processing apparatus 100 according to the second embodiment calculates, per layer, an error gradient difference between the previous iteration and the current iteration. In addition, the information processing apparatus 100 calculates, per layer, a threshold from an initial error gradient immediately after setting or change of a learning rate. In addition, a layer whose error gradient difference is less than a corresponding threshold is specified as a skip layer, and until the learning rate is changed, the processing in the BACKWARD phase, the COMMUNICATE phase, and the UPDATE phase on the skip layer is omitted.

In this way, regarding those layers whose error gradients have converged and on which learning has not substantially been performed under the current learning rate, the calculation of the error gradients, the communication among the GPUs, and the updating of the weights are stopped. Thus, since less unnecessary processing is performed in the machine learning, the calculation amount is reduced. As a result, the execution time of the machine learning is shortened. When it is expected that changing the learning rate will drop the error gradients, the calculation of the error gradients, the communication among the GPUs, and the updating of the weights of the individual layers are resumed. In addition, by determining a threshold based on an initial error gradient per learning rate and per layer, appropriate convergence determination based on the error gradient level under the same learning rate is performed.

In one aspect, the calculation amount of updating parameters of a model including a plurality of layers is reduced.

## Claims

1. A computer program that causes a computer (10) to execute a process comprising:
starting learning processing (16) for generating a model (13) including a plurality of layers (13a to 13c), each of which includes a parameter (14a to 14c), the learning processing repeatedly calculating an error of an output of the model by using training data (15), calculating an error gradient, which indicates a gradient of the error with respect to the parameters, for each of the layers, and updating the parameters based on the error gradients;
calculating a difference (17) between a first error gradient (17a) calculated in a first iteration (16a) in the learning processing and a second error gradient (17b) calculated in a second iteration (16b) after the first iteration for a first layer (13b) among the plurality of layers; and
skipping, in a case where the difference (17) is less than a threshold (18), the calculating of the error gradient of the first layer (13b) and the updating of the parameter (14b) in a third iteration (16c) after the second iteration.

2. The computer program according to claim 1, wherein the computer program further causes the computer (10) to execute a process of determining the threshold, based on an initial error gradient (Δw0), which indicates an error gradient calculated in an iteration executed in response to the starting of the learning processing.

3. The computer program according to claim 2, wherein the computer program further causes the computer (10) to execute a process of setting a learning rate (LR) used to update the parameters and changing the learning rate based on a number (m) of iterations in which the learning processing has been executed, and
wherein the determining of the threshold includes changing the threshold, based on a different initial error gradient (Δw0), which indicates an error gradient calculated in an iteration executed in response to change of the learning rate (LR).

4. The computer program according to claim 1, wherein, in each iteration in the learning processing, the computer program further causes the computer (10) to execute a process of calculating different errors from different training data by using a plurality of processing nodes (104-1, 104-2), calculating different error gradients from the different errors by using the plurality of processing nodes, synthesizing the different error gradients by allowing the plurality of processing nodes to communicate with each other, and updating the parameters, based on the synthesized error gradients, and
wherein the skipping includes skipping the calculating of the different error gradients, the communicating among the plurality of processing nodes, and the updating of the parameter for the first layer.

5. The computer program according to claim 1, wherein the model is a multilayer neural network (310).

6. The computer program according to claim 1, wherein the second iteration (m) is immediately after the first iteration (m-1), and the third iteration is immediately after the second iteration.

7. The computer program according to claim 1,
wherein the calculating of the difference includes calculating the difference for each of the plurality of layers (311 to 316), and
wherein the skipping includes determining, among the plurality of layers, a layer (313 to 315) whose difference is less than the threshold and skipping the calculation of the error gradient and the updating of the parameter for the determined layer.

8. A learning method executed by a computer (10), the learning method comprising:
starting learning processing (16) for generating a model (13) including a plurality of layers (13a to 13c), each of which includes a parameter (14a to 14c), the learning processing including repeatedly calculating an error of an output of the model by using training data (15), calculating an error gradient, which indicates a gradient of the error with respect to the parameters, for each of the layers, and updating the parameters based on the error gradients;
calculating a difference (17) between a first error gradient (17a) calculated in a first iteration (16a) in the learning processing and a second error gradient (17b) calculated in a second iteration (16b) after the first iteration for a first layer (13b) among the plurality of layers; and
skipping, in a case where the difference (17) is less than a threshold (18), the calculating of the error gradient of the first layer (13b) and the updating of the parameter (14b) in a third iteration (16c) after the second iteration.

9. An information processing apparatus comprising:
storage means (11) for storing a model (13) including a plurality of layers (13a to 13c), each of which includes a parameter (14a to 14c), and training data (15); and
processing means (12) for starting learning processing (16), which repeatedly calculates an error of an output of the model by using the training data (15), calculates an error gradient, which indicates a gradient of the error with respect to the parameters, for each of the layers, and updates the parameters based on the error gradients, calculating a difference (17) between a first error gradient (17a) calculated in a first iteration (16a) in the learning processing and a second error gradient (17b) calculated in a second iteration (16b) after the first iteration for a first layer (13b) among the plurality of layers, and skipping, in a case where the difference is less than a threshold (18), the calculating of the error gradient and the updating of the parameter (14b) for the first layer (13b) in a third iteration (16c) after the second iteration.

## Amended claims

### Amended claims in accordance with Rule 137(2) EPC.

1. A computer program comprising instructions which, when the program is executed by a computer (10), cause the computer to carry out steps of:
starting learning processing (16) for generating a model (13) including a plurality of layers (13a to 13c), each of which includes a parameter (14a to 14c), the learning processing repeatedly calculating an error of an output of the model by using training data (15), calculating an error gradient, which indicates a gradient of the error with respect to the parameters, for each of the layers, and updating the parameters based on the error gradients;
calculating a difference (17) between a first error gradient (17a) calculated in a first iteration (16a) in the learning processing and a second error gradient (17b) calculated in a second iteration (16b) after the first iteration for a first layer (13b) among the plurality of layers; and
skipping, in a case where the difference (17) is less than a threshold (18), the calculating of the error gradient of the first layer (13b) and the updating of the parameter (14b) in a third iteration (16c) after the second iteration.

2. The computer program according to claim 1, wherein the instructions further cause the computer (10) to carry out a step of determining the threshold, based on an initial error gradient (Δw0), which indicates an error gradient calculated in an iteration executed in response to the starting of the learning processing.

3. The computer program according to claim 2,
wherein the instructions further cause the computer (10) to carry out steps of setting a learning rate (LR) used to update the parameters and changing the learning rate based on a number (m) of iterations in which the learning processing has been executed, and
wherein the determining of the threshold includes changing the threshold, based on a different initial error gradient (Δw0), which indicates an error gradient calculated in an iteration executed in response to change of the learning rate (LR).

4. The computer program according to claim 1, wherein, in each iteration in the learning processing, the instructions further cause the computer (10) to carry out steps of calculating different errors from different training data by using a plurality of processing nodes (104-1, 104-2), calculating different error gradients from the different errors by using the plurality of processing nodes, synthesizing the different error gradients by allowing the plurality of processing nodes to communicate with each other, and updating the parameters, based on the synthesized error gradients, and
wherein the skipping includes skipping the calculating of the different error gradients, the communicating among the plurality of processing nodes, and the updating of the parameter for the first layer.

5. The computer program according to claim 1, wherein the model is a multilayer neural network (310).

6. The computer program according to claim 1, wherein the second iteration (m) is immediately after the first iteration (m-1), and the third iteration is immediately after the second iteration.

7. The computer program according to claim 1,
wherein the calculating of the difference includes calculating the difference for each of the plurality of layers (311 to 316), and
wherein the skipping includes determining, among the plurality of layers, a layer (313 to 315) whose difference is less than the threshold and skipping the calculation of the error gradient and the updating of the parameter for the determined layer.

8. A learning method executed by a computer (10), the learning method comprising:
starting learning processing (16) for generating a model (13) including a plurality of layers (13a to 13c), each of which includes a parameter (14a to 14c), the learning processing including repeatedly calculating an error of an output of the model by using training data (15), calculating an error gradient, which indicates a gradient of the error with respect to the parameters, for each of the layers, and updating the parameters based on the error gradients;
calculating a difference (17) between a first error gradient (17a) calculated in a first iteration (16a) in the learning processing and a second error gradient (17b) calculated in a second iteration (16b) after the first iteration for a first layer (13b) among the plurality of layers; and
skipping, in a case where the difference (17) is less than a threshold (18), the calculating of the error gradient of the first layer (13b) and the updating of the parameter (14b) in a third iteration (16c) after the second iteration.

9. An information processing apparatus comprising:
storage means (11) for storing a model (13) including a plurality of layers (13a to 13c), each of which includes a parameter (14a to 14c), and training data (15); and
processing means (12) for starting learning processing (16), which repeatedly calculates an error of an output of the model by using the training data (15), calculates an error gradient, which indicates a gradient of the error with respect to the parameters, for each of the layers, and updates the parameters based on the error gradients, calculating a difference (17) between a first error gradient (17a) calculated in a first iteration (16a) in the learning processing and a second error gradient (17b) calculated in a second iteration (16b) after the first iteration for a first layer (13b) among the plurality of layers, and skipping, in a case where the difference is less than a threshold (18), the calculating of the error gradient and the updating of the parameter (14b) for the first layer (13b) in a third iteration (16c) after the second iteration.
